(19) Europäisches Patentamt
European Patent Office
Office européen des brevets

(11) **EP 4 369 044 A1**

(12) **EUROPEAN PATENT APPLICATION**

(43) Date of publication:
**15.05.2024   Bulletin 2024/20**

(21) Application number: **23183021.7**

(22) Date of filing: **03.07.2023**

(51) International Patent Classification (IPC):
**G01S 17/86** (2020.01)    **G01S 17/89** (2020.01)
**G06F 18/25** (2023.01)

(52) Cooperative Patent Classification (CPC):
**G01S 17/86; G01S 17/89**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022   US 202217954372**

(71) Applicant: **INTEL Corporation
Santa Clara, CA 95054 (US)**

(72) Inventors:
- **CHATTOPADHYAY, Rita
  Chandler, 85226 (US)**
- **HAGHIGHIPANAH, Mohammad
  Tigard, 97224 (US)**

(74) Representative: **Viering, Jentschura & Partner
mbB
Patent- und Rechtsanwälte
Am Brauhaus 8
01099 Dresden (DE)**

(54) **INTELLIGENT AND ADAPTIVE MULTI-MODAL REAL-TIME SIMULTANEOUS LOCALIZATION AND MAPPING BASED ON LIGHT DETECTION AND RANGING AND CAMERA OR IMAGE SENSORS**

(57)    A method for motion tracking is provided including receive first data, receive second data, transform the second data to generate transformed second data corresponding to the first frame; determine a first weighting factor for the first data and a second weighting factor for the transformed second data; weight the first data using the first weighting factor to generate first weighted data; weight the transformed second data using the second weighting factor to generate second weighted data; and combine the weighted first data and the weighted second data to generate combined image data. The first data include a first frame of a first scene of an environment detected by a camera or image sensor. The second data include a second frame of a second scene of an environment detected by a light detection and ranging (LIDAR) sensor. At least a subset of the second scene corresponds to the first scene.

FIG.4                                                                  400

Receive first data and second data — 402

Transforming the second data to generate transformed second data — 404

Combining weighted first data and weighted second data to generate combined image data — 406

EP 4 369 044 A1

## Description

### Technical Field

The present disclosure relates to real-time simultaneous localization and mapping (SLAM), e.g. in robot navigation.

### Background

In simultaneous localization and mapping (SLAM) a robot constructs or updates a map of an unknown environment while simultaneously keeping track of its location within it. Optical sensors of cameras and laser scanners can be used for generating and updating the map. Here, a robot may be an autonomous vehicle, an autonomous mobile robot, or a drone, e.g. an unmanned aerial vehicle (UAV).

Current SLAM are Lidar Odometry and Mapping in Real-time (LOAM) and its variants, e.g. light weight and ground optimized lidar odometry and mapping (LegoLOAM), Visual-lidar Odometry and Mapping (VLOAM), and Monocular, Stereo and RGB-D Cameras, Visual-Inertial (ORB2-SLAM). In SLAM, error accumulation can reach arbitrarily high values. Current SLAM solutions use only cameras or only light detection and ranging (LIDAR) systems as sensors and independently from each other. For example, VLOAM combines visual odometry and LIDAR odometry. Here, visual odometry runs at high frequency (60Hz) to estimate motion, and LIDAR odometry runs at low frequency (1 Hz) to refine motion estimate. However, in VLOAM, visual odometry and LIDAR odometry are estimated independently from each other.

However, laser scanners, e.g. in (LIDAR) systems are sensitive to rain, and cameras are often used to get a semantic interpretation of the scene but cannot work in bad lighting conditions. In current VLOAM solutions it is not possible to dynamically adjust the importance weight factor between visual odometry and LIDAR odometry to consider environmental conditions. Thus, current SLAM solutions do not to utilize LIDAR data jointly with data from a camera. Hence, robots using a current SLAM solution may not meet a desired functional safety such as redundancy and reliability.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG.1 shows a schematic illustration of a robot using the MM-SLAM;
FIG. 2 shows a block diagram of modules of the controller of the robot using the MM-SLAM;
FIGS.3A and 3B show illustrations of a robot in an environment using the MM-SLAM; and
FIG.4 shows a flow diagram illustrating a MM- SLAM.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

Illustratively, a multi-modal simultaneous localization and mapping (MM-SLAM) is provided utilizing LIDAR sensors and camera or image sensors, e.g. camera or image sensors, jointly. Thus, a dynamical adjustment of the weighting factor of information gathered using LIDAR sensors and camera or image sensors can be performed in real-time considering conditions of the environment. For example, when the lighting condition in the environment becomes poor or error increases in visual key points, more weights can be given to the information gathered using the LIDAR sensor than the information gathered using the camera or image sensor. The MM-SLAM can adopt the weighting of data from the camera or image sensor and the LIDAR sensor to changes in the environment in real-time. Further, MM-SLAM can use historical data along with a probability density function to adjust the weight for data of each of the LIDAR sensor and the camera or image sensor. If these weights would remain the same, in some environments, due to uncertainties in sensors, error could accumulate which could increase the local drift of the motion tracking. Thus, MM-SLAM may reduce local uncertainties and allow to limit a global drift in determining the position of the robot in a map. Hence, MM-SLAM provides improved performance, e.g. regarding absolute trajectory error, and functional safety and reliability with redundancy. Further, MM-SLAM is scalable to consider data from further sensors in addition to the camera or image sensor and the LIDAR sensor.

Illustratively, in MM-SLAM a controller used for SLAM of a robot adjusts the weighting factor of informations of its environment gathered by at least one LIDAR sensor and at least one camera or image sensor. Thus, the controller can provide information about the robot pose in different conditions of the environment. For example, conditions of the environment may include one or more of a lighting condition, an image texture, an image blurriness factor, a laser scan range, a tunnel, etc. Illustratively, when placing a robot using MM-SLAM in different environmental condition such as different brightness level, image texture, image blurriness, tunnels, and maximum laser scan range, the informations gathered by sensors of the robot may be used equally or based on a weighting of sensor information depending on the environmental condition in real-time. Hence, the controller can localize itself with higher degree of reliability and safety in a map. The redundancy of sensor informations form LIDAR sensors and camera or image sensors may also improve the absolute trajectory error. Further, in case of a malfunctionality in one sensor, the controller could still localize itself in the map with the help of another sensor. Thus, a robot using MM-SLAM having a sensor malfunction may still bring itself into a safe zone.

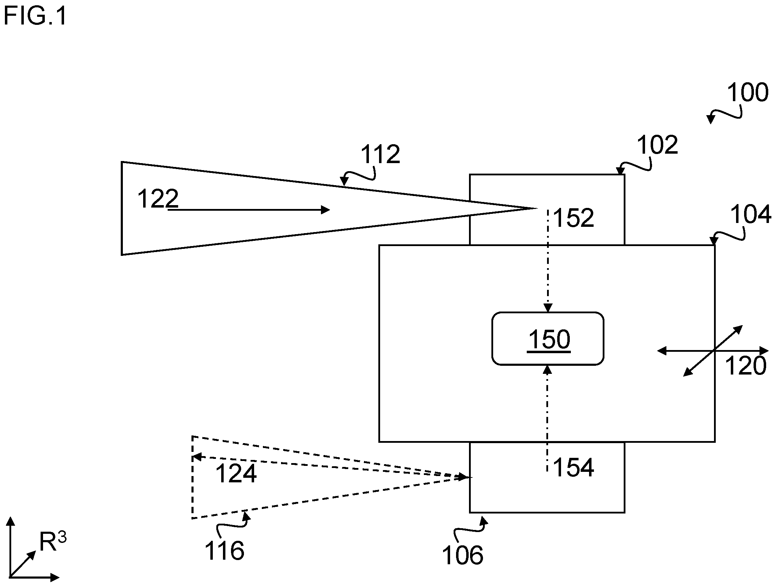

**FIG.1** shows a schematic illustration of a robot using the multi-modal real-time simultaneous localization and mapping. The robot 100 may be any kind of an autonomous systems, an autonomous vehicle, an autonomous mobile robot, or a drone, e.g. an unmanned aerial vehicle (UAV), or any other kind of agent, e.g. a mobile communication device, a smart phone, or a vehicle, having a motion tracking functionality.

The robot 100 may include a chassis 104 or housing 104 having a controller 150. The robot 100 may include at least a camera or image sensor 102 and a LIDAR sensor 106, e.g. attached to the chassis 104.

The robot 100 may be configured movable in an environment, in FIG.1 illustrated by the double arrow 120. The robot 100 may move through its environment, and a motion tracking functionality of the robot 100 may determine the position of the robot in the environment, e.g. in a map of the environment in real-time. However, the map may not necessarily a pre-existing map but can be generated while moving through the environment.

The controller 150 may be configured to determine a map of the environment of the robot 100, track the position of the robot 100 in the map, control the motion 120 of the robot 100 through the environment and/or a setting of one or more sensors 102, 106 of the robot 100.

The camera or image sensor 102 may gather visual information as first information from the environment, e. g. a first scene. The camera or image sensor 102 may have a first field of view (FOV) which may be adjustable. As an example, the camera or image sensor 102 may zoom in into a sub-section of the environment (also denoted as scene of the robot 100). The zoom may be an optical zoom or a digital zoom. The camera or image sensor 102 may be configured movable, e.g. a camera arranged on a gimbal. Alternatively, or in addition, the camera or image sensor 102 may be stationary, e.g. forward-looking. Alternatively, or in addition, the camera or image sensor 102 may have a stationary component, e.g. a stationary camera, and a scanning component, e.g. a scanning mirror, to gather visual informations from different portions of the scene of the robot 100. The camera or image sensor 102 may provide the first information as first data to the controller 150 (in FIG.1 illustrated by the upper dash-dotted line 152).

The LIDAR sensor 106 may be a laser scanner, e.g. a coherent LIDAR system or a time-of-flight (TOF) LIDAR system. The LIDAR sensor 106 may gather distance information (e.g. ranging) between the robot 100 and an object in the environment as second information from the environment, e.g. a second scene. The LIDAR sensor 106 may provide the second information as second data to the controller 150 (in FIG.1 illustrated by the lower dash-dotted line 154). The LIDAR sensor 106 may have a second FOV which may be adjustable. The LIDAR sensor 106 may be configured to scan the surrounding of the robot, e.g. in 360 °. As an example, the LIDAR sensor 106 may configured for detecting obstacle in the trajectory of the robot 100.

The camera or image sensor 102 may be arranged at a first position on the chassis 104 of the robot 100. The LIDAR sensor 106 may be arranged at a second position on the chassis 104 of the robot 100. Thus, the LIDAR sensor 106 may be spaced apart from the camera or image sensor 102. Hence, the LIDAR sensor 106 and the camera or image sensor 102 may have a different perspective on the environment of the robot 100. However, a subset of the second scene, e.g. an object in front of the robot 100, may also be included in the first scene.

The controller 150 may extract key points from the first scene and the second scene, e.g. the same object in front of the robot 100 in the first scene and the second scene. Thus, the controller 150 may transfer the key points of the object in the second scene into the same coordinates as the key points of the same object in the first scene. The controller 150 may thus match the key points representing the object in the first scene and the second scene. The controller 150 may than weight the matched key points from the LIDAR sensor and the camera or image sensor depending on a condition of the environment of the robot 100.

In other words, a non-transitory computer readable medium may have instructions stored therein that, when executed by the controller 150, cause the controller 150 to: receive first data, wherein the first data may include a first frame of a first scene of an environment detected by the camera or image sensor 102; receive second data, wherein the second data may include a second frame of a second scene of an environment detected by the LIDAR sensor 106, wherein at least a subset of the second scene corresponds to the first scene (e.g. including same objects); transform the second data to generate transformed second data corresponding to the first frame; determine a first weighting factor for the first data and a second weighting factor for the transformed second data; weight the first data using the first weighting factor to generate first weighted data; weight the transformed second data using the second weighting factor to generate second weighted data; and combine the weighted first data and the weighted second data to generate combined image data.

The camera or image sensor 102 may include a stereo camera or a RGB-D camera, and the first data may include stereo image date or RGB-D image data. The camera or image sensor 102 may include a camera mounted on a gimbal. The first data may include orientation data of the gimbal. The second scene may have about a same field of view as a field of view of the camera or image sensor 102 (e.g. including same objects). The camera or image sensor 102 may have a first frame rate, e.g. 60Hz, and the LIDAR sensor 106 may have a second frame rate, e.g. 1 Hz, different from the first frame rate.

The controller 150 may identify the first frame corresponding to a timing of the second frame for the transformation of second data, wherein the first data may include a sequence of first frames. Illustratively, the camera or image sensor 102 may generate a plurality of first frames of the first scene. The controller 150 may identify the second frame, e.g. a timing the second frame was generated, with regard to the corresponding first frame of the plurality of first frames for the transformation and key point matching of the second frame. Thus, the first frame and the second frame include objects in the same condition of the environment. However, the second frame may be interpolated or extrapolated based on historic second data of the LIDAR sensor, e.g. previous or subsequent second frames of the LIDAR sensor 106.

Illustratively, the controller 150 may extract key points of the first scene from the first frame. The controller 150 may match extracted key points with extracted key points of a previous frame of the camera or image sensor 102. The controller 150 may transform the matched key points of the first frame to coordinates of the environment. The controller 150 may extract key points of the second scene from the second frame. The controller 150 may match the extracted key points with extracted key points of a previous frame of the LIDAR sensor 106. The controller 150 may transform the matched key points of the second frame to correspond to key points of the camera or image sensor, e.g. of the first frame. As an example, the controller 150 may rotate and translation the second data to coordinates of the environment to transform the received second data.

The first weighting factor and the second weighting factor may add up to 1, for example. Alternatively, the first weighting factor and the second weighting factor may add up to a number larger than 1. The first weighting factor and the second weighting factor may be determined based on a condition of the environment. The condition of the environment may be at least one of a lighting condition, an image texture, an image blurriness factor, a laser scan range, a tunnel. The controller 150 may sum the first data multiplied with the first weighting factor and the transformed second data multiplied with the second weighting factor for generating the combined image data. The controller 150 may transmit the combined image data to a motion tracking module configured for tracking a motion in the environment. Alternatively, or in addition, the controller 150 may include the motion tracking module.

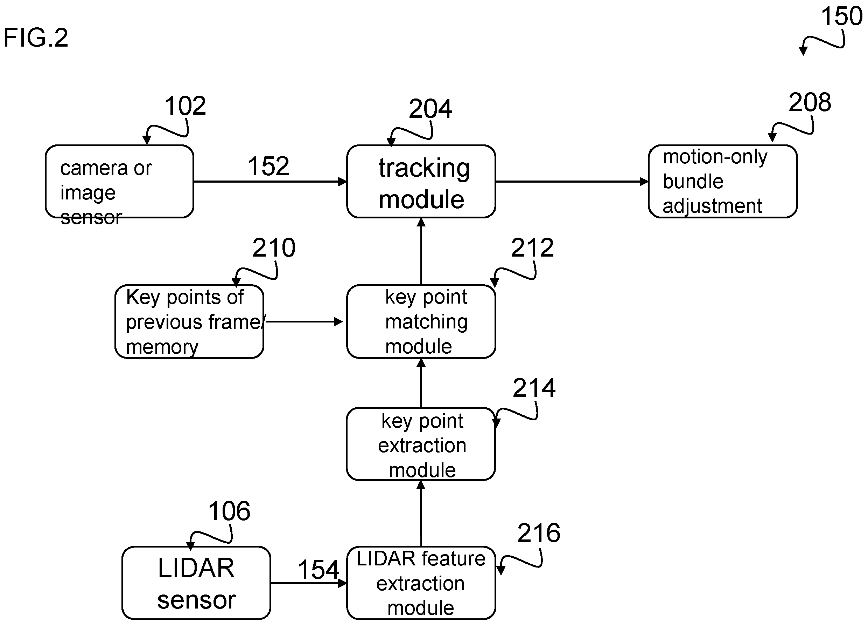

FIG. 2 shows a block diagram of modules of the controller of the robot using the multi-modal real-time simultaneous localization and mapping. The controller 150 includes for SLAM a tracking module 204 which may include a pre-process input and a pose prediction, e.g. a motion model, or a re-localization.

The tracking module 204 receives first data 152 from the camera or image sensor 102. Here, the first data 152 may be stereo image data or RGB-D image data, for example. The first data 152 may further include data corresponding to the pose or orientation of a camera mounted on a gimbal.

The tracking module 204 may pre-process the frames from the camera or image sensor 102 and may determine the motion of the robot by analyzing frame-to-frame changes. The tracking module 204 further receives second data 154 from a scanning sensor 106, e.g. the LIDAR sensor 106. The second data 154 may be a LIDAR point cloud in case of a LIDAR sensor 106, for example.

To process the LIDAR data 154, the controller 150 may extract LIDAR feature points from the LIDAR point cloud in a LIDAR feature extraction module 216.

Feature points may be on sharp edges and planar surface patches of objects in the environment of the LIDAR sensor 106. Here, i may be a point in $P_k$, $i \in P_k$, and S may be a set of consecutive points of i returned by the laser scanner of the LIDAR sensor in the same scan. The point cloud formed by $P_k$ may generate a surface S. The smoothness factor c of the local surface S as seen in equation 1 may be used for the extraction of feature points:

$$c = \frac{1}{|S| \left\| X^L_{(k,i)} \right\|} \left\| \sum_{j \in s, j \neq i} (X^L_{(k,i)} - X^L_{(k,j)}) \right\| \tag{1}$$

The controller 150 may sort the points from the LIDAR point cloud $P_k$ based on the c value determined using eq. 1. Large c values may be edge features of an object in the environment of the LIDAR sensor 106, and small c values may be planar features of the surface S. For every consecutive LIDAR frame, the controller calculates the c value, select a predetermined number of points (this may be an adjustable parameter, as an example 50 data points) including the highest and lowest c values as key points (also denoted as key point extraction) in a key point extraction module 214. Further, the controller matches the key points between two consecutive frames, e.g. by using a Nearest Neighbor (kd-tree) (also denoted as key point matching) in a key point matching module 212. Key points of previous second frames may be stored in a memory 210 of the controller or transmitted to the key point matching module 212.

In other words, the controller may perform the following:

calculate the c value
divide the point clouds in multiple regions to ensure points are selected from all the regions
select highest and lowest c values from all the regions
match the feature points between the two consecutive LIDAR frames by Nearest Neighbor (kd-tree)

Thus, the controller 150 generates a set of matched key point features between two consecutive frames of the LIDAR sensor.

Then, the controller 150 transforms the matched key points of the LIDAR system 106 to coordinates used for matched key points of the camera or image sensor. The coordinates may be world coordinates $R^3$ of the robot 100 (see FIG.1) or coordinates of the camera or image sensor 102.

Then, a so-called motion-only bundle adjustment 208 may be used to estimate a pose of the robot.

Currently, a motion-only bundle adjustment optimizes the camera orientation and position, by minimizing the re-projection error between matched 3D points $X^i \in R^3$ in world coordinates $R^3$ and key points $x^i$ of the camera system as shown in equation 2.

$$\{\boldsymbol{R}, \boldsymbol{t}\} = argmin_{R,t} \ \sum_{i \in x} p\left(\left\|x^i - \pi_s(RX^i + t)\right\|^2\right) \qquad (2)$$

Where $p$ is a robust Huber cost function. $\{\boldsymbol{R}, \boldsymbol{t}\}$ is a transformation from world coordinates to camera frame.

The projection function $\pi_s$ is defined as:

$$\pi_s\begin{pmatrix} x \\ y \\ z \end{pmatrix} = \begin{matrix} f_x\frac{x}{z} + c_x \\ f_y\frac{y}{z} + c_y \\ f_x\frac{x-b}{z} + c_x \end{matrix} \qquad (3)$$

where $(f_x, f_y)$ is the focal length, $(c_x, c_y)$ is the principal point, and $b$ is a baseline known from calibration of the camera or image sensor. For example, "b" may be the baseline if a set of stereo cameras is used, and thus "b" may the distance between two stereo cameras. However if instead a RGB-D camera is being used, "b" may be the baseline, e.g. the distance between a structured light projector and an infrared camera.

However, in MM-SLAM the controller 150 may incorporate LIDAR data into the motion only bundle adjustment 208 by an amended Equation 2 to accept LIDAR data and find the robot pose by minimizing both the re-projection error and consecutive LIDAR data points error:

$$\{\boldsymbol{R}, \boldsymbol{t}\} = argmin_{R,t} \ \sum_{i \in x} p\left(w_1\left\|x^i - \pi_s(RX^i + t)\right\|^2 + w_2\left\|X_L^i - (RX_L^{i-1} + t)\right\|^2\right) \quad (4)$$

where, $X_L^i$ is a LIDAR landmark in a current camera frame i.

The controller 150 may transfer the LIDAR landmark of a current frame from the LIDAR sensor 106 to points in a camera or image sensor by

$$X_L^i = R_l^c L^i + t_l^c \qquad (5)$$

where $R_l^c$ is a rotation matrix and $t_l^c$ is a translation vector to transform LIDAR points $L^i$ from the second frame (i.e. the LIDAR sensor frame) to the first frame (i.e. the camera or image sensor frame).

Further, $X_L^{i-1}$ is a previous LIDAR landmark in world coordinates. The controller may determine $X_L^{i-1}$ by

$$X_L^{i-1} = R_c^w (R_l^c L^{i-1} + t_l^c) + t_c^w \qquad (6)$$

where $R_c^w$ and $t_c^w$ are rotation and translation to transform previous LIDAR key points in the camera frame to world coordinates.

A transformation matrix $T_L^C$ may be used to transform LIDAR data coordinates into camera coordinates. $T_L^C$ may be a 4x4 transformation matrix to transform a point from LIDAR coordinates to camera coordinates. $R_l^c$ may be a 3x3 matrix and $t_l^c$ may be a 3x1 vector that may be basically the rotation and translation components of the transformation matrix $T_L^C$.

This configuration assumes that the transformation matrix $T_L^C$, which transforms a point in LIDAR frame onto the camera frame is known. The transformation matrix $T_L^C$ may be available by a vendor. Alternatively, or in addition, the transformation matrix can be estimated by using a standard calibration method. Alternatively, the controller may determine the pose of the camera or image sensor and the pose of the LIDAR sensor independently as the motion of the robot (e.g. the chassis) is same for the camera or image sensor and the LIDAR sensors. The transformation matrix $T_c^w$ may be the inverse of $\{R,t\}$ which may be estimated in equation (4) from the camera pose that is associated with the previous LIDAR point $L^{i-1}$. However, note that the pose of the camera or image sensor and the pose of the LIDAR sensor may be variable, e.g. in case the camera or image sensor is mounted on a gimbal.

Further, in equation 4, $w_1$ and $w_2$ are configurable weighting factors to control the weighting, e.g. importance, of the data from the camera or image sensor and the LIDAR sensor. The weighting may be based on past sensor data, e.g. a user preference, a heuristic method, a probability density function, or adapted to dynamic changes in the environment of the robot. Changes in the environment may be, but are not limited thereto, a change of lighting condition, image texture, image blurriness factor, laser scan range, tunnels, or any combination thereof.

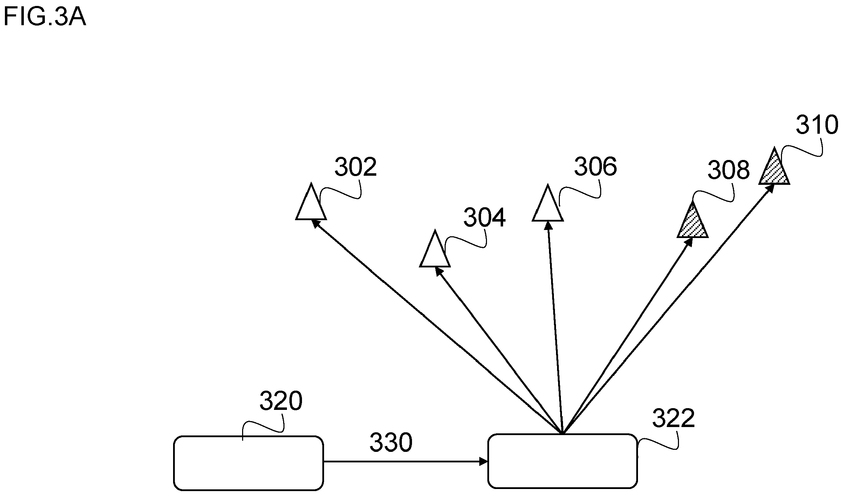

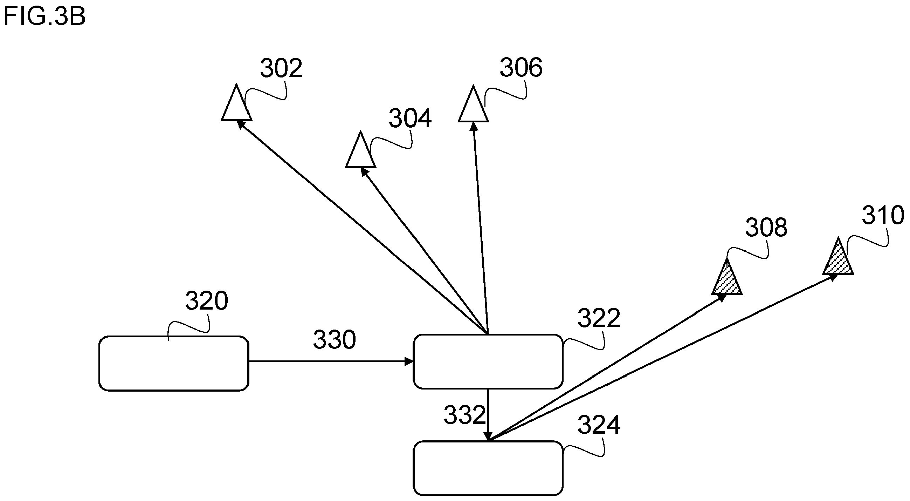

**FIG.3A** and **FIG.3B** show illustrations of a robot in an environment using the multi-modal real-time simultaneous localization and mapping. **FIG.3A** illustrates the case of a known transformation matrix $T_L^C$. Illustratively, the environment of the robot may include landmarks 302, 304, 306 determined by the camera or image sensor and landmarks 308, 310 determined by the LIDAR sensor that are determined by an re-projection edge for the camera or image sensor or a LIDAR edge for the LIDAR sensor. A transformation of second data 320, e.g. matched key points of the LIDAR system, to coordinates used by the camera or image sensor 322 may be performed using the a known transformation matrix $T_L^C$ 330. However, in case this transformation matrix is not known, e.g. the pose of a camera on a gimbal changes by moving the gimbal, the transformation matrix can be estimated as illustrated in **FIG.3B** using an extrinsic matrix 332, e. g. from world coordinates.

In other words, to solve equation 4, a General Graph Optimization library such as g2o can be used. As an example, FIG.3A and FIG.3B show illustrations of setting up equation 4 in g2o library. FIG. 3A illustrates the case of a known transformation matrix $T_L^C$. Illustratively, the environment of the robot may include landmarks 302, 304, 306,

determined by the camera or image sensor and landmarks 308, 310 determined the LIDAR sensor that are determined by an re-projection edge created in the g2o library for the camera or image sensor and a LIDAR edge for the LIDAR sensor. In this scenario, $T_L^C$ has been used to bring LIDAR points into camera coordinate. Thus, LIDAR landmarks 308, 310 can be linked directly to a camera vertex 322 created for g2o. The origin vertex 320 may be created in g2o and an odometry edge 330 may be connecting origin vertex 320 to the camera vertex 322. However, in case where matched key points of the LIDAR system, to coordinates used by the camera vertex 322 is not known, e.g. the pose of a camera on a gimbal changes by moving the gimbal, the transformation matrix $T_L^C$ can be estimated as illustrated in FIG.3B by using an extrinsic matrix edge 332. In this scenario, a separate LIDAR vertex 324 may be created and LIDAR landmarks 308, 310 may be linked by LIDAR edge to the LIDAR vertex 324.

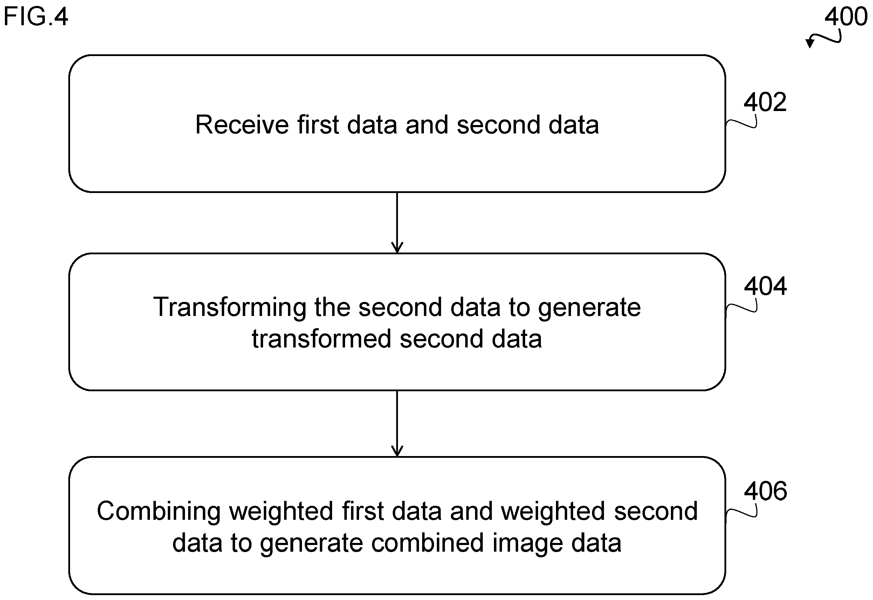

**FIG.4** shows a flow diagram illustrating a multi-modal real-time simultaneous localization and mapping. The method 400 for motion tracking may include receiving 402 first data, wherein the first data may include a first frame of a first scene of an environment detected by a camera or image sensor; and receiving 402 second data, wherein the second data may include a second frame of a second scene of an environment detected by a light detection and ranging (LIDAR) sensor, wherein at least a subset of the second scene corresponds to the first scene.

The method 400 may further include transforming the second data to generate transformed second data corresponding to the first frame.

The method 400 may further include determining a first weighting factor for the first data and a second weighting factor for the transformed second data. The method 400 may further include weight 406 the first data using the first weighting factor to generate first weighted data; weighting the transformed second data using the second weighting factor to generate second weighted data.

The method 400 may thus include combining 406 the weighted first data and the weighted second data to generate combined image data.

The second scene may have about a same field of view as a field of view of the camera or image sensor.

The camera or image sensor may have a first frame rate and LIDAR sensor may have a second frame rate, different from the first frame rate. The first data may include a sequence of first frames, and the transformation of second data further may include identifying the first frame corresponding to a timing of the second frame.

Receiving first data may include an extraction of key points of the first scene from the first frame. Receiving first data may include a matching of extracted key points with extracted key points of a previous frame of the camera or image sensor. Matched key points of the first frame may be transformed to coordinates of the environment.

Receiving second data may include an extraction of key points of the second scene from the second frame. Receiving second data may include a matching of extracted key points with extracted key points of a previous frame of the LIDAR sensor. Matched key points of the second frame may be transformed to correspond to key points of the first frame. The transformation of the received second data may include a rotation and translation of the second data to coordinates of the environment.

The first weighting factor and the second weighting factor add up to 1. The first weighting factor and the second weighting factor may be determined based on a condition of the environment. The environment condition may be at least one of lighting condition, image texture, image blurriness factor, laser scan range, tunnels.

Generating the combined image data may include a summation of the first data multiplied with the first weighting factor and the transformed second data multiplied with the second weighting factor. The method may further include transmitting the combined image data to a motion tracking module configured for tracking a motion in the environment.

The method 400 may be performed in real time.

The subject matter of this disclosure may be configured as a motion tracker. The motion tracker may include a means for receiving first data, wherein the first data comprise a first frame of a first scene of an environment detected by a camera or image sensor; a means for receiving second data, wherein the second data comprise a second frame of a second scene of an environment detected by a light detection and ranging (LIDAR) sensor, wherein at least a subset of the second scene corresponds to the first scene; a means for transforming the second data to generate transformed second data corresponding to the first frame; a means for determining a first weighting factor for the first data and a second weighting factor for the transformed second data; a means for weighting the first data using the first weighting factor to generate first weighted data; a means for weighting the transformed second data using the second weighting factor to generate second weighted data; and a means for combining the weighted first data and the weighted second data to generate combined image data.

The motion tracker may further optionally be configured wherein the second scene has about a same field of view as a field of view of the camera or image sensor.

Alone or in combiation with the above paragraph, the motion tracker may optionally be configured wherein the camera or image sensor has a first frame rate and LIDAR sensor has a second frame rate, different from the first frame rate.

Alone or in combination with any of the above two paragraphs, the motion tracker may optionally be configured, wherein the first weighting factor and the second weighting factor add up to 1.

Alone or in combination with any of the above three paragraphs, the motion tracker may optionally be configured wherein the first weighting factor and the second weighting factor are determined based on a condition of the environment.

Alone or in combination with any of the above four paragraphs, the motion tracker may optionally be configured wherein the environment condition is at least one of lighting condition, image texture, image blurriness factor, laser scan range, tunnels.

Alone or in combination with any of the above five paragraphs, the motion tracker may optionally further include a means for transmitting the combined image data to a motion tracking module configured for tracking a motion in the environment.

The means disclosed above with respect to the motion tracker may be or include one or more processors, which may be configured to perform the functions in the means as disclosed above. Each or any combination of means as disclosed above may be performed by a single processor, such that the motion tracker may be implemented by one or more processors, wherein the functions of any one or more means are performed by a single processor.

In the following, various aspects of the present disclosure will be illustrated:

Example 1 is a non-transitory computer readable medium having instructions stored therein that, when executed by a controller, cause the controller to: receive first data, wherein the first data include a first frame of a first scene of an environment detected by a camera or image sensor; receive second data, wherein the second data include a second frame of a second scene of an environment detected by a light detection and ranging (LIDAR) sensor, wherein at least a subset of the second scene corresponds to the first scene; transform the second data to generate transformed second data corresponding to the first frame; determine a first weighting factor for the first data and a second weighting factor for the transformed second data; weight the first data using the first weighting factor to generate first weighted data; weight the transformed second data using the second weighting factor to generate second weighted data; and combine the weighted first data and the weighted second data to generate combined image data.

In Example 2, the subject matter of Example 1 can optionally include that the camera or image sensor includes a stereo camera or a RGB-camera, and the first data include stereo image date or RGB image data.

In Example 3, the subject matter of Example 1 or 2 can optionally include that the camera or image sensor includes a camera mounted on a gimbal, and that the first data include orientation data of the gimbal.

In Example 4, the subject matter of any one of Examples 1 to 3 can optionally include that the LIDAR sensor has field of view in a range from about 60 ° to about 360°.

In Example 5, the subject matter of any one of Examples 1 to 4 can optionally include that the second scene has or includes about a same field of view as a field of view of the camera or image sensor.

In Example 6, the subject matter of any one of Examples 1 to 5 can optionally include that the camera or image sensor has a first frame rate and LIDAR sensor has a second frame rate, different from the first frame rate. The second frame rate may be lower than the first frame rate.

In Example 7, the subject matter of any one of Examples 1 to 6 can optionally have instructions stored therein that, when executed by the controller, cause the controller to identify the first frame corresponding to a timing of the second frame for the transformation of second data, wherein the first data include a sequence of first frames.

In Example 8, the subject matter of any one of Examples 1 to 7 can optionally have instructions stored therein that, when executed by the controller, cause the controller to extract key points of the first scene from the first frame.

In Example 9, the subject matter of any one of Examples 1 to 8 can optionally have instructions stored therein that, when executed by the controller, cause the controller to match extracted key points with extracted key points of a previous frame of the camera or image sensor.

In Example 10, the subject matter of any one of Examples 1 to 9 can optionally have instructions stored therein that, when executed by the controller, cause the controller to transform the matched key points of the first frame to coordinates of the environment.

In Example 11, the subject matter of any one of Examples 1 to 10 can optionally have instructions stored therein that, when executed by the controller, cause the controller to extract of key points of the second scene from the second frame.

In Example 12, the subject matter of any one of Examples 1 to 11 can optionally have instructions stored therein that, when executed by the controller, cause the controller to match the extracted key points with extracted key points of a previous frame of the LIDAR sensor.

In Example 13, the subject matter of any one of Examples 1 to 12 can optionally have instructions stored therein that, when executed by the controller, cause the controller to transform the matched key points of the second frame to correspond to key points of the first frame.

In Example 14, the subject matter of any one of Examples 1 to 13 can optionally have instructions stored therein that, when executed by the controller, cause the controller to rotate and translation the second data to coordinates of the environment to transform the received second data.

In Example 15, the subject matter of any one of Examples 1 to 14 can optionally include that the first weighting factor and the second weighting factor add up to 1.

In Example 16, the subject matter of any one of Examples 1 to 15 can optionally include that the first weighting factor and the second weighting factor are determined based on a condition of the environment.

In Example 17, the subject matter of any one of Examples 1 to 16 can optionally include that the condition of the environment is at least one of lighting condition, image texture, image blurriness factor, laser scan range, tunnels.

In Example 18, the subject matter of any one of Examples 1 to 17 can optionally have instructions stored therein that, when executed by the controller, cause the controller to sum the first data multiplied with the first weighting factor and the transformed second data multiplied with the second weighting factor for generating the combined image data.

In Example 19, the subject matter of any one of Examples 1 to 18 can optionally have instructions stored therein that, when executed by the controller, cause the controller to transmit the combined image data to a motion tracking module configured for tracking a motion in the environment.

Example 20 is a method for motion tracking, the method including: receiving first data, wherein the first data include a first frame of a first scene of an environment detected by a camera or image sensor; receiving second data, wherein the second data include a second frame of a second scene of an environment detected by a light detection and ranging (LIDAR) sensor, wherein at least a subset of the second scene corresponds to the first scene; transforming the second data to generate transformed second data corresponding to the first frame; determining a first weighting factor for the first data and a second weighting factor for the transformed second data; weight the first data using the first weighting factor to generate first weighted data; weighting the transformed second data using the second weighting factor to generate second weighted data; and combining the weighted first data and the weighted second data to generate combined image data.

In Example 21, the subject matter Example 20 can optionally include that the camera or image sensor includes a stereo camera or a RGB-camera, and the first data include stereo image date or RGB image data.

In Example 22, the subject matter of any one of Examples 20 to 21 can optionally include that the camera or image sensor includes a camera mounted on a gimbal, and that the first data include orientation data of the gimbal.

In Example 23, the subject matter of any one of Examples 20 to 22 can optionally include that the second scene has about a same field of view as a field of view of the camera or image sensor.

In Example 24, the subject matter of any one of Examples 20 to 23 can optionally include that the camera or image sensor has a first frame rate and LIDAR sensor has a second frame rate, different from the first frame rate.

In Example 25, the subject matter of any one of Examples 20 to 24 can optionally include that the first data include a sequence of first frames, and the transformation of second data further includes identifying the first frame corresponding to a timing of the second frame.

In Example 26, the subject matter of any one of Examples 20 to 25 can optionally include that receiving first data includes an extraction of key points of the first scene from the first frame.

In Example 27, the subject matter of any one of Examples 20 to 26 can optionally include that receiving first data includes a matching of extracted key points with extracted key points of a previous frame of the camera or image sensor.

In Example 28, the subject matter of any one of Examples 20 to 27 can optionally include that the matched key points of the first frame are transformed to coordinates of the environment.

In Example 29, the subject matter of any one of Examples 20 to 28 can optionally include that receiving second data includes an extraction of key points of the second scene from the second frame.

In Example 30, the subject matter of any one of Examples 20 to 29 can optionally include that receiving second data includes a matching of extracted key points with extracted key points of a previous frame of the LIDAR sensor.

In Example 31, the subject matter of any one of Examples 20 to 30 can optionally include that the matched key points of the second frame are transformed to correspond to key points of the first frame.

In Example 32, the subject matter of any one of Examples 20 to 31 can optionally include that the transformation of the received second data includes a rotation and translation of the second data to coordinates of the environment.

In Example 33, the subject matter of any one of Examples 20 to 32 can optionally include that the first weighting factor and the second weighting factor add up to 1.

In Example 34, the subject matter of any one of Examples 20 to 33 can optionally include that the first weighting factor and the second weighting factor are determined based on a condition of the environment.

In Example 35, the subject matter of any one of Examples 20 to 34 can optionally include that the environment condition is at least one of lighting condition, image texture, image blurriness factor, laser scan range, tunnels.

In Example 36, the subject matter of any one of Examples 20 to 35 can optionally include that generating the combined image data includes a summation of the first data multiplied with the first weighting factor and the transformed second data multiplied with the second weighting factor.

In Example 37, the subject matter of any one of Examples 20 to 36 can optionally include that the method further includes transmitting the combined image data to a motion tracking module configured for tracking a motion in the environment.

In Example 38, the subject matter of any one of Examples 20 to 37 can optionally include that the method is performed in real time.

Example 40 is an autonomous system including a camera or image sensor, a light detection and ranging (LIDAR) sensor, and a tracking module for tracking a motion of the robot through an environment, the tracking module configured to: receive first data, wherein the first data include a first frame of a first scene of an environment detected by a camera or image sensor; receive second data, wherein the second data include a second frame of a second scene of an environment detected by a light detection and ranging (LIDAR) sensor, wherein at least a subset of the second scene corresponds to the first scene; transform the second data to generate transformed second data corresponding to the first frame; determine a first weighting factor for the first data and a second weighting factor for the transformed second data; weighting the first data using the first weighting factor to generate first weighted data; weighting the transformed second data using the second weighting factor to generate second weighted data; and combining the weighted first data and the weighted second data to generate combined image data.

In Example 41, the subject matter of Example 40 can optionally include that the camera or image sensor includes a stereo camera or a RGB-camera, and the first data include stereo image date or RGB image data.

In Example 42, the subject matter of any one of Examples 40 to 41 can optionally include that the camera or image sensor includes a camera mounted on a gimbal, and wherein the first data include orientation data of the gimbal.

In Example 43, the subject matter of any one of Examples 40 to 42 can optionally include that the second scene has about a same field of view as a field of view of the camera or image sensor.

In Example 44, the subject matter of any one of Examples 40 to 43 can optionally include that the camera or image sensor has a first frame rate and LIDAR sensor has a second frame rate, different from the first frame rate.

In Example 45, the subject matter of any one of Examples 40 to 44 can optionally include that the first data include a sequence of first frames, and the transformation of received second data further includes identifying the first frame corresponding to a timing of the second frame.

In Example 46, the subject matter of any one of Examples 40 to 45 can optionally include that receiving first data includes an extraction of key points of the first scene from the first frame.

In Example 47, the subject matter of any one of Examples 40 to 46 can optionally include that receiving first data includes a matching of extracted key points with extracted key points of a previous frame of the camera or image sensor.

In Example 48, the subject matter of any one of Examples 40 to 47 can optionally include that the matched key points of the first frame are transformed to coordinates of the environment.

In Example 49, the subject matter of any one of Examples 40 to 48 can optionally include that receiving second data includes an extraction of key points of the second scene from the second frame.

In Example 50, the subject matter of any one of Examples 40 to 49 can optionally include that receiving second data includes a matching of extracted key points with extracted key points of a previous frame of the LIDAR sensor.

In Example 51, the subject matter of any one of Examples 40 to 50 can optionally include that the matched key points of the second frame are transformed to correspond to key points of the first frame.

In Example 52, the subject matter of any one of Examples 40 to 51 can optionally include that the transformation of the received second data includes a rotation and translation of the second data to coordinates of the environment.

In Example 53, the subject matter of any one of Examples 40 to 52 can optionally include that the first weighting factor and the second weighting factor add up to 1.

In Example 54, the subject matter of any one of Examples 40 to 53 can optionally include that the first weighting factor and the second weighting factor are determined based on a condition of the environment.

In Example 55, the subject matter of any one of Examples 40 to 54 can optionally include that the environment condition is at least one of lighting condition, image texture, image blurriness factor, laser scan range, tunnels.

In Example 56, the subject matter of any one of Examples 40 to 55 can optionally include that generating the combined image data includes a summation of the first data multiplied with the first weighting factor and the transformed second data multiplied with the second weighting factor.

In Example 57, the subject matter of any one of Examples 40 to 56 can optionally further include transmitting the combined image data to a motion tracking module configured for tracking a motion in the environment.

In Example 58, the subject matter of any one of Examples 40 to 57 can optionally include that the robot is performed in real time.

In Example 59, the subject matter of any one of Examples 40 to 58 can optionally include that the autonomous system is an autonomous vehicle, an autonomous mobile robot, or a drone, e.g. an unmanned aerial vehicle.

Example 60 is a motion tracker, including: an means for receiving first data, wherein the first data comprise a first frame of a first scene of an environment detected by a camera or image sensor; a means for receiving second data, wherein the second data include a second frame of a second scene of an environment detected by a light detection and ranging (LIDAR) sensor, wherein at least a subset of the second scene corresponds to the first scene; a means for transforming the second data to generate transformed second data corresponding to the first frame; a means for determining a first weighting factor for the first data and a second weighting factor for the transformed second data; a means for weight the first data using the first weighting factor to generate first weighted data, and weighting the transformed second data using the second weighting factor to generate second weighted data; and a means for combining the weighted first data and the weighted second data to generate combined image data.

In Example 61, the subject matter of Example 60 can optionally include that the second scene has about a same field of view as a field of view of the camera or image sensor.

In Example 62, the subject matter of Example 60 or 61 can optionally include that the camera or image sensor has a first frame rate and LIDAR sensor has a second frame rate, different from the first frame rate.

In Example 63, the subject matter of any one of Examples 60 to 62 can optionally include that the first weighting factor and the second weighting factor add up to 1.

In Example 64, the subject matter of any one of Examples 60 to 63 can optionally include that the first weighting factor and the second weighting factor are determined based on a condition of the environment.

In Example 65, the subject matter of Example 64 can optionally include that the environment condition is at least one of lighting condition, image texture, image blurriness factor, laser scan range, tunnels.

In Example 66, the subject matter of any one of Examples 60 to 65 can optionally include a transmission means for transmitting the combined image data to a motion tracking means configured for tracking a motion in the environment.

In Example 67, the subject matter of any one of Examples 60 to 66 can optionally include that motion tracker is configured to perform motion tracking in real time.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. A non-transitory computer readable medium having instructions stored therein that, when executed by a controller, cause the controller to:

   receive first data, wherein the first data comprise a first frame of a first scene of an environment detected by a camera or image sensor;
   receive second data, wherein the second data comprise a second frame of a second scene of an environment detected by a light detection and ranging (LIDAR) sensor, wherein at least a subset of the second scene corresponds to the first scene;
   transform the second data to generate transformed second data corresponding to the first frame;
   determine a first weighting factor for the first data and a second weighting factor for the transformed second data;
   weight the first data using the first weighting factor to generate first weighted data;
   weight the transformed second data using the second weighting factor to generate second weighted data; and
   combine the first weighted data and the second weighted data to generate a combined image data.

2. The non-transitory computer readable medium of claim 1, further having instructions stored therein that, when executed by the controller, cause the controller to identify the first frame corresponding to a timing of the second frame for the transformation of second data, wherein the first data comprise a sequence of first frames.

3. The non-transitory computer readable medium of claim 1 or 2, further having instructions stored therein that, when executed by the controller, cause the controller to extract key points of the first scene from the first frame, and to match extracted key points with extracted key points of a previous frame of the camera or image sensor.

4. The non-transitory computer readable medium of claim 3, further having instructions stored therein that, when executed by the controller, cause the controller to transform the matched key points of the first frame to coordinates of the environment.

5. The non-transitory computer readable medium of any one of claims 1 to 4, further having instructions stored therein that, when executed by the controller, cause the controller to extract of key points of the second scene from the second frame, and to match the extracted key points with extracted key points of a previous frame of the LIDAR sensor.

6. The non-transitory computer readable medium of claim 5, further having instructions stored therein that, when executed by the controller, cause the controller to transform the matched key points of the second frame to correspond to key points of the first frame.

7. The non-transitory computer readable medium of any one of claims 1 to 6, further having instructions stored therein that, when executed by the controller, cause the controller to rotate and translate the second data to coordinates of the environment to transform the received second data.

8. The non-transitory computer readable medium of any one of claims 1 to 7, further having instructions stored therein that, when executed by the controller, cause the controller to transmit the combined image data to a motion tracking module configured for tracking a motion in the environment.

9. An autonomous system comprising a camera or image sensor, a light detection and ranging (LIDAR) sensor, and a tracking module for tracking a motion of the robot through an environment, the tracking module configured to:

receive first data, wherein the first data comprise a first frame of a first scene of an environment detected by a camera or image sensor;
receive second data, wherein the second data comprise a second frame of a second scene of an environment detected by a light detection and ranging (LIDAR) sensor, wherein at least a subset of the second scene corresponds to the first scene;
transform the second data to generate transformed second data corresponding to the first frame;
determine a first weighting factor for the first data and a second weighting factor for the transformed second data;
weighting the first data using the first weighting factor to generate first weighted data;
weighting the transformed second data using the second weighting factor to generate second weighted data; and
combining the first weighted data and the second autonomous system data to generate combined image data.

10. The autonomous system of claim 9,
wherein the camera or image sensor comprises a camera mounted on a gimbal, and wherein the first data comprise orientation data of the gimbal, wherein the camera or image sensor has a first frame rate and LIDAR sensor has a second frame rate, different from the first frame rate.

11. The autonomous system of claim 9 or 10, wherein the autonomous system comprises a robot, an autonomous vehicle, an autonomous mobile robot, a drone, or an unmanned aerial vehicle.

12. The autonomous system of any one of claims 9 to 11,
wherein the second scene has about a same field of view as a field of view of the camera or image sensor.

13. The autonomous system of any one of claims 9 to 12,
wherein the first weighting factor and the second weighting factor are determined based on a condition of the environment, wherein the environment condition is at least one of lighting condition, image texture, image blurriness factor, laser scan range, tunnels.

14. The autonomous system of any one of claims 9 to 13, further comprising a transmission means for transmitting the combined image data to a motion tracking means configured for tracking a motion in the environment.

15. The autonomous system of any one of claims 9 to 14, wherein the motion tracker is configured to perform motion tracking in real time.

FIG.1

EP 4 369 044 A1

FIG.2

**150**

**102** camera or image ~~sensor~~

**152**

**204** tracking module

**208** motion-only bundle adjustment

**210** Key points of previous frame memory

**212** key point matching module

**214** key point extraction module

**106** LIDAR sensor

**154**

**216** LIDAR feature extraction module

EP 4 369 044 A1

EP 4 369 044 A1

FIG.3A

FIG.3B

FIG.4

400

Receive first data and second data — 402

Transforming the second data to generate transformed second data — 404

Combining weighted first data and weighted second data to generate combined image data — 406

Europäisches
Patentamt
European
Patent Office
Office européen
des brevets

# EUROPEAN SEARCH REPORT

**Application Number**

EP 23 18 3021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/185324 A1 (LEE JONG HO [US]) 16 June 2022 (2022-06-16) | 1-12,14, 15 | INV. G01S17/86 |
| Y | * paragraph [0060] – paragraph [0066] * <br> * paragraph [0090] – paragraph [0094] * <br> * paragraph [0121] – paragraph [0169] * <br> ----- | 13 | G01S17/89 <br> G06F18/25 |
| Y | US 2019/130601 A1 (KAVULYA SOILA [US] ET AL) 2 May 2019 (2019-05-02) <br> * paragraph [0001] * <br> * paragraph [0012] – paragraph [0013] * <br> ----- | 13 | |
| A | EP 3 957 954 A1 (HONEYWELL INT INC [US]) 23 February 2022 (2022-02-23) <br> * paragraph [0004] – paragraph [0005] * <br> * paragraph [0013] – paragraph [0016] * <br> * paragraph [0036] * <br> ----- | 10 | |

**TECHNICAL FIELDS SEARCHED (IPC)**

G01S
G06F
G06V

The present search report has been drawn up for all claims

| Place of search | Date of completion of the search | Examiner |
|---|---|---|
| Munich | 21 March 2024 | Heiß, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 3021

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | Publication date | Patent family member(s) | | Publication date |
|---|---|---|---|---|---|
| US 2022185324 | A1 | 16-06-2022 | CN | 114627451 A | 14-06-2022 |
| | | | DE | 102021131820 A1 | 15-06-2022 |
| | | | GB | 2601837 A | 15-06-2022 |
| | | | KR | 20220083533 A | 20-06-2022 |
| | | | KR | 20220167263 A | 20-12-2022 |
| | | | US | 2022185324 A1 | 16-06-2022 |
| US 2019130601 | A1 | 02-05-2019 | US | 2019130601 A1 | 02-05-2019 |
| | | | US | 2022114752 A1 | 14-04-2022 |
| | | | WO | 2020139478 A1 | 02-07-2020 |
| EP 3957954 | A1 | 23-02-2022 | CN | 114078142 A | 22-02-2022 |
| | | | EP | 3957954 A1 | 23-02-2022 |

EPO FORM P0459

For more details about this annex : see Official Journal of the European Patent Office, No. 12/82